Europäisches Patentamt

European Patent Office

Office européen des brevets

(19)

⑪ Veröffentlichungsnummer **0 176 867**
**B1**

(12) **EUROPÄISCHE PATENTSCHRIFT**

(45) Veröffentlichungstag der Patentschrift:
10.08.88

(21) Anmeldenummer: **85111775.4**

(22) Anmeldetag: **18.09.85**

(51) Int. Cl.⁴: **B 01 D 29/36**

(54) **Filterarmatur mit integriertem Druckminderer.**

(30) Priorität: **25.09.84 DE 3435128**

(43) Veröffentlichungstag der Anmeldung:
**09.04.86 Patentblatt 86/15**

(45) Bekanntmachung des Hinweises auf die Patenterteilung:
**10.08.88 Patentblatt 88/32**

(84) Benannte Vertragsstaaten:
**AT CH DE FR LI SE**

(56) Entgegenhaltungen:
**EP-A-0 069 240**
**DE-A-2 339 891**
**DE-U-7 814 804**
**US-A-2 544 244**
**US-A-2 553 763**

**Die Akte enthält technische Angaben, die nach
dem Eingang der Anmeldung eingereicht wurden
und die nicht in dieser Patentschrift enthalten sind.**

(73) Patentinhaber: **HANS SASSERATH & CO KG,
Mühlenstrasse 62, D-4052 Korschenbroich 1 (DE)**

(72) Erfinder: **Hecking, Willi, Andreasstrasse 21, D-4050
Mönchengladbach 2 (DE)**
Erfinder: **Sasserath, Arend, Dahlenerstrasse 693,
D-4050 Mönchengladbach 2 (DE)**

(74) Vertreter: **Wolgast, Rudolf, Dipl.- Chem. Dr., Dipl.-
Phys. Jürgen Weisse Dipl.Chem. Dr. Rudolf
Wolgast Bökenbusch 41 Postfach 11 03 86,
D-5620 Velbert 11 Langenberg (DE)**

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

EP 0 176 867 B1

## Beschreibung

Die Erfindung betrifft eine Filterarmatur zum Einbau in eine Durchflußleitung für ein flüssiges oder gasförmiges Medium, bestehend aus einem Rohrstück mit einem Eingang und einem Ausgang, mit einem mit dem Eingang verbundenen seitlichen Ansatz, an dem eine Filtertasse zur Aufnahme einer allgemein ringförmigen Filterkerze anschließbar ist, mit einem koaxial in dem Ansatz verlaufenden, mit dem Ausgang verbundenen Verbindungsteil, an den der Innenraum der Filterkerze anschließbar ist, und mit mindestens einem Manometeranschluß.

Filterarmaturen dieser Art (z. B. Braukmann-Hauswasser-Station HS 10) werden im allgemeinen an der der Filtertasse gegenüberliegenden Seite mit einem Druckminderer zu einer kombinierten Armatur verbunden, wobei durch den Einbau des Filters ein Schutz gegen schlechter werdende Wasserqualitäten und dadurch entstehende Korrosionsprobleme angestrebt wird. Ein gewisser Nachteil solcher Anordnungen besteht darin, daß die Armaturen nach ihrem Einbau für Wartungen und Reparaturen von gegenüberliegenden Seiten zugänglich sein müssen.

Dementsprechend besteht die Aufgabe der Erfindung darin, eine Filterarmatur mit integriertem Druckminderer zu schaffen, die in ihrem Aufbau gegenüber den bekannten Armaturen verbessert ist.

Erfindungsgemäß wird diese Aufgabe dadurch gelöst, daß das Verbindungsstück an der der Filterkerze zugekehrten Seite mit einer Öffnung zur Aufnahme eines Druckminderers und die Filtertasse an der dem Verbindungsstück gegenüberliegenden Seite mit einem Durchbruch zur Durchführung des Druckminderers versehen ist.

Bei dieser Ausbildung der Filterarmatur läßt sich der Druckminderer in den Innenraum der Filterkerze einsetzen, so daß das Filter wie auch der Druckminderer von der gleichen Seite und nicht von zwei gegenüberliegenden Seiten her zugänglich sind. Vorteilhafterweise kann dabei der Ansatz des Rohrstücks von einem doppelwandigen, gewinkelten Ansatz gebildet werden, dessen Innenrohr den Innenraum der Filterkerze mit dem Ausgang verbindet und dessen Außenrohr den Eingang mit dem zwischen der Filtertasse und der Filterkerze gebildeten Ringraum verbindet, und der Ansatz kann an dem der Filtertasse abgewandten Ende über ein lösbares und im gelösten Zustand im Winkel gegenüber dem Rohrstück verstellbares Anschlußverbindungsteil mit dem Rohrstück verbunden sein. Dadurch läßt sich die Filtertasse in jedem gewünschten Winkel zu einer gegebenen Rohrleitung einstellen.

Vorteilhafterweise weist das Druckmindererventil in an sich bekannter Weise einen Ventilsitzkörper, einen damit zusammenwirkenden und mit einer Membran verbundenen Steuerkolben, eine mit dem Ausgangsdruck beaufschlagbare Steuerkammer auf einer Seite der Membran, eine die Membran auf deren anderer Seite belastende Feder, und eine Federkammer mit einer Einstellvorrichtung zur Einstellung der Federspannung auf, der Ventilsitzkörper ist abdichtend in die Öffnung des Verbindungsstücks eingesetzt und der Steuerkolben mit einer Durchbohrung versehen, die die Steuerkammer mit dem Ausgang verbindet.

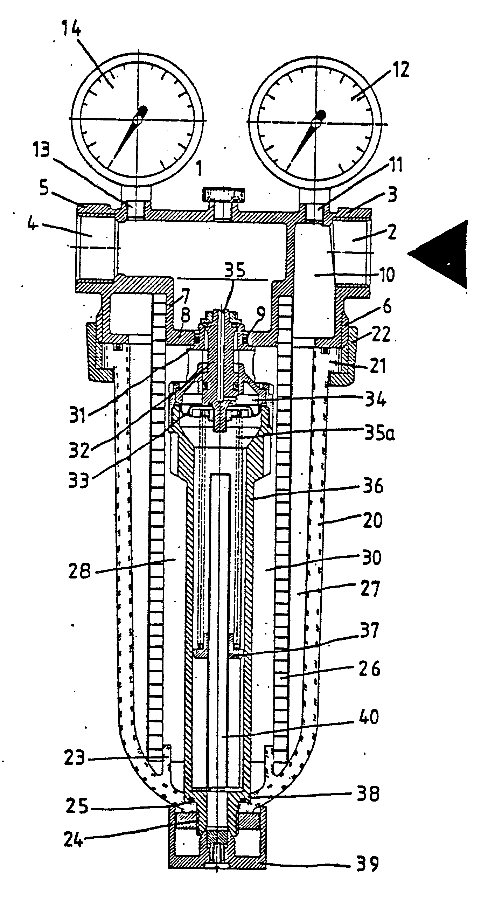

Ein Ausführungsbeispiel der erfindungsgemäßen Filterarmatur ist in der Abbildung in einem Längsschnitt dargestellt und wird nachfolgend anhand der Bezugzeichen im einzelnen erläutert und beschrieben.

Die Filterarmatur enthält zunächst ein Rohrstück 1, das am Eingang 2 mit einem Anschlußstutzen 3 und an seinem Ausgang 4 mit einem Anschlußstutzen 5 versehen ist. Ein seitlicher Ansatz 6 ist mit einem Außengewinde zum Anschluß der weiter unten beschriebenen Filteranordnung versehen In diesen Ansatz erstreckt sich ein koaxiales Verbindungsstück 7, das an der der Filteranordnung zugewandten Seite durch einen Ring 8 mit einer Öffnung 9 versehen ist. Das Verbindungsstück 7 ist vom Eingang 2 des Rohrstücks 1 getrennt, steht aber mit dessen Ausgang 4 in Verbindung. Der Eingang 2 des Rohrstücks steht in Verbindung mit einem Ringraum 10, der in dem Ansatz 6 ausgebildet ist und das Verbindungsstück 7 umgibt. Der Ringraum 10 ist mit einem Prüfgerät- oder Manometeranschluß 11 versehen, an den in dem dargestellten Ausführungsbeispiel ein Eingangsdruck-Manometer 12 angeschlossen ist. Das dargestellte Ausführungsbeispiel enthält ausgangsseitig einen weiteren Prüfgerät- oder Manometeranschluß 13, an den ein Ausgangsdruck-Manometer 14 angeschlossen ist.

Die Filteranordnung besteht aus einer Filtertasse 20, die an ihrer offenen Seite mit einem Kragen 21 versehen ist, der durch eine Überwurfmutter 22 und unter Zwischenlage eines Dichtungsrings abdichtend an dem Ansatz 6 des Rohrstücks 1 befestigt ist. Am gegenüberliegenden Ende ist an der Innenseite der Filtertasse 20 eine Führung 23 und ein Durchbruch 24 mit einem ringförmigen Vorsprung 25 ausgebildet.

In die Filtertasse 20 ist eine Filterkerze 26 eingesetzt, die an beiden Enden geführt ist, und zwar an einem Ende an der Führung 23 der Filtertasse 20 und am anderen Ende außenseitig an dem Verbindungsstück 7. Im zusammengebauten Zustand der Filterarmatur wird zwischen der Filtertasse 20 und der Filterkerze 26 ein Ringraum 27 gebildet, der über den Ringraum 10 des Ansatzes 6 mit dem Eingang 2 des Rohrstücks 1 in Verbindung steht. Der Innenraum 28 der Filterkerze 26 ist über die Öffnung 9 in dem Ring 8 des Verbindungsstücks 7 mit dem Ausgang 4 des Rohrstücks 1 verbunden. In den Innenraum 28 der Filterkerze 26 ist ein Druckminderer 30 eingebaut. Dieser Druckminderer 30 ist in konventioneller Weise aufgebaut, vgl. z. B. die Hausanschlußeinheit Syropak, Typ 327, der Anmelderin. Der Druckminderer 30 besteht im einzelnen aus einem Ventilsitzkörper 31, der unter Zwischenlage eines Dichtungsrings abdichtend in die Öffnung 9 des Rings 8 des Verbindungsstücks 7 eingesetzt ist und einen Ventilsitz bildet. Durch den Ventilsitzkörper 31 erstreckt sich ein Steuerkolben 32, dessen dem Ventilsitz abgewandtes Ende an einer Membran 33 befestigt ist. An der Seite der Membran 33, die dem Ventilsitzkörper 31 zugekehrt ist, ist eine Steuerkammer 34 ausgebildet, die über eine Durchbohrung 35 des Steuerkolbens mit dem Ausgang 4 des Rohrstücks 1 bzw. der Hinterdruckseite des Druckminderers verbunden ist. An der dem Ventilsitzkörper 31 abgewandten Seite ist die Membran 33 mit einer Feder 35a belastet, die sich durch eine Federkammer 36 hindurch erstreckt und an einem verstellbaren Widerlager 37 abstützt. Die ringförmige Federkammer 36 erstreckt sich durch den Innenraum des Filters 26 hindurch und ist mit einer Ringschulter 38 ausgebildet, die unter Zwischenlage eines Dichtungsrings an dem ringförmigen Vorsprung 25 in dem Durchbruch 24 der Filtertasse 20 abdichtend anliegt. Das Ende der Federkammer 36 ist durch den Durchbruch 24 hindurchgeführt und mit einer Einstellkappe 39 versehen, mittels derer die Stellung des Widerlagers 37 auf einer Spindel 40 zwecks Einstellung der Spannung der Feder 35 verschiebbar ist.

Die vorstehend beschriebene Filterarmatur mit integriertem Druckminderer arbeitet folgendermaßen:

Wenn der Druck in der Steuerkammer 34 an der einen Seite der Membran 33 dem Druck der Feder 36 auf die andere Seite der Membran 33 die Waage hält, ist der Druckminderer im drucklosen Zustand und der Steuerkolben 32 liegt an dem Ventilsitzkörper 31 schliessend an. Fällt der Druck am Ausgang 4 des Rohrstücks 1 und damit auch in der Steuerkammer 34, so wird der Steuerkolben 32 von dem Ventilsitzkörper 31 abgehoben und das am Eingang 2 des Rohrstücks 1 anstehende Medium tritt durch den Ringraum 10 des Ansatzes 6 und durch die Filterkerze 26 in deren Innenraum 28 und von dort zum Ausgang 4 des Rohrstücks 1.

Die Filteranordnung und der Druckminderer 30 sind an der gleichen Seite des Rohrstücks 1 angeordnet, so daß die Filterarmatur nur von einer Seite her zugänglich zu sein braucht. Die Filteranordnung läßt sich in einfacher Weise, nämlich durch Lösen der Überwurfmutter 22, vom Ansatz 6 lösen, z. B. zum Austausch der Filterkerze 26, die sich leicht von dem Verbindungsstück 7 lösen läßt. Nach Ausbau der Filterkerze 26 ist der Druckminderer 30 für Wartungs- oder Reparaturzwecke leicht zugänglich.

Für den Einbau oder die Anwendung der vorstehend beschriebenen Filterarmatur empfiehlt sich eine senkrechte Stellung, die bei waagerechtem Verlauf der Rohrleitung immer gegeben ist. Bei nicht waagerecht verlaufenden Rohrleitungen verwendet man vorteilhafterweise einen Ansatz, der doppelwandig ausgebildet ist. Dieser Ansatz ist an einem Ende mit der Filteranordnung und am anderen Ende über eine lösbare Schraubverbindung mit dem Rohrstück 1 verbunden; dabei verbindet das Außenrohr des doppelwandigen Ansatzes den Eingang 2 des Rohrstücks 2 mit dem Ringraum 27 zwischen der Filtertasse 20 und der Filterkerze 26, und das Innenrohr des doppelwandigen Ansatzes ist an einem Ende mit einem Verbindungsstück entsprechend dem Verbindungsstück 7 ausgebildet und verbindet den Innenraum 28 der Filterkerze 26 mit dem Ausgang 4 des Rohrstücks 1. Das der Filteranordnung abgekehrte Ende des doppelwandigen Ansatzes ist über eine lösbare Schraubverbindung mit dem Rohrstück 1 in der Weise verbunden, daß nach Lösung der Schraubverbindung der doppelwandige Ansatz gegenüber dem Rohrstück 1 in dem jeweils gewünschten Winkel verdreht und wieder befestigt werden kann. Ein solcher doppelwandiger Ansatz ist beispielsweise in der Druckschrift Badu Schutzfilter der Firma Speck-Pumpen, Typ SF beschrieben.

**Patentansprüche**

1. Filterarmatur zum Einbau in eine Durchflußleitung für ein flüssiges oder gasförmiges Medium, bestehend aus einem Rohrstück (1) mit einem Eingang (2) und einem Ausgang (4), mit einem mit dem Eingang (2) verbundenen seitlichen Ansatz (6), an den eine Filtertasse (20) zur Aufnahme einer allgemein ringförmigen Filterkerze (26) anschließbar ist, mit einem koaxial in dem Ansatz verlaufenden, mit dem Ausgang verbundenen Verbindungsteil (7), an den der Innenraum der Filterkerze (26) anschließbar ist, und mit mindestens einem Manometeranschluß (11), dadurch gekennzeichnet, daß das Verbindungsstück (7) an der der Filterkerze (26) zugekehrten Seite mit einer Öffnung (9) zur Aufnahme eines Druckminderers (30) und die Filtertasse (20) an der dem Verbindungsstück (7) gegenüberliegenden Seite mit einem Durchbruch (24) zur Durchführung des Druckminderers (30) versehen ist.

2. Filterarmatur nach Anspruch 1, dadurch gekennzeichnet, daß das Verbindungsstück in einem doppelwandigen, gewinkelten Ansatz ausgebildet ist, dessen Innenrohr den Innenraum (28) der Filterkerze (26) mit dem Ausgang (4) verbindet und dessen Außenrohr den Eingang (2) mit dem zwischen der Filtertasse (20) und der Filterkerze (26) gebildeten Ringraum (27) verbindet, und daß der Ansatz an dem der Filtertasse (20) abgewandten Ende über ein lösbares und im gelösten Zustand im Winkel gegenüber dem Rohrstück (1) verstellbares Anschlußverbindungsteil mit dem Rohrstück (1) verbunden ist.

3. Filterarmatur nach Anspruch 1 oder 2, dadurch gekennzeichnet, daß die Filtertasse (20) gegenüberliegend von dem Verbindungsstück (7) eine Führung (23) für die Filterkerze (26) aufweist.

4. Filterarmatur nach einem der Ansprüche 1 bis 3, dadurch gekennzeichnet, daß das Druckmindererventil (30) in an sich bekannter Weise einen Ventilsitzkörper (31), einen damit zusammenwirkenden und mit einer Membran (33) verbundenen Steuerkolben (32), eine mit dem Ausgangsdruck beaufschlagbare Steuerkammer (34) auf einer Seite der Membran (33), eine die Membran (33) auf deren anderer Seite belastende Feder (35), und eine Federkammer (36) mit einer Einstellvorrichtung (39) zur Einstellung der Federspannung aufweist und daß der Ventilsitzkörper (31) abdichtend in die Öffnung (9) des Verbindungsstücks (7) eingesetzt ist.

5. Filterarmatur nach Anspruch 4, dadurch gekennzeichnet, daß der Steuerkolben (32) mit einer Durchbohrung (35) versehen ist, die den Ausgang (4) und die Steuerkammer (34) miteinander verbindet.

6. Filterarmatur nach Anspruch 4 oder 5, dadurch gekennzeichnet, daß die Federkammer (36) an dem der Membran (33) abgewandten Ende eine Ringschulter (38) aufweist, daß die Federkammer (36) den Durchbruch (24) in der Filtertasse (20) durchsetzt und der Durchbruch (24) mit einem ringförmigen Vorsprung (25) versehen ist, an dem die Ringschulter (38) der Federkammer (36) abdichtend anliegt.

## Claims

1. Filter assembly for installation in a throughflow pipe for a liquid or gaseous medium, consisting of a tube piece (1) having an inlet (2) and an outlet (4), having a lateral projection (6) connected to the inlet (2), to which projection (6) a filter cup (20) for accommodation of a generally annular multiple tube filter (26) is connected, having a connection element (7) extending coaxially in the projection and connected to the outlets to which connection element (7) the interior of the multiple tube filter (26) is connected, and having at least one manometer part (11), characterized in that the connection element (7) is provided with an opening (9) for accommodation of a pressure reducer (30) on the side facing the multiple tube filter (26), and the filter cup (20) is provided with an aperture (24) for passage of the pressure reducer (30) on the side opposite the connection member (7).

2. Filter assembly as set forth in claim 1, characterized in that the connection member is shaped to form a double-walled lateral projection, the internal tube of which connects the interior (28) of the multiple tube filter (26) to the outlet (4) and the external tube of which connects the inlet (2) to the annulus (27) formed between the filter cup (20) and the multiple tube filter (26), and in that the projection is connected to the tube piece (1) at the end remote from the filter cup (20) through a detachable connector element angularly adjustable relative to the tube piece (1) in its detached state.

3. Filter assembly as set forth in claim 1 or 2, characterized in that the filter cup (20) has a guide (23) for the multiple tube filter (26) opposite the connection member (7).

4. Filter assembly as set forth in anyone of the claims 1 to 3, characterized in that the pressure reducing valve (30) in a way known per se has a valve seat body (31), a piston, valve (32) coacting therewith and connected to a diaphragm (33), a control chamber (34) exposed to the outlet pressure on one side of the diaphragm (33), a spring (35) loading the diaphragm (33) on its other side, and a spring chamber (36) having an adjusting device (39) for adjusting the spring tension, and in that the valve seat body (31) is sealingly inserted into the opening (9) of the connection element (7).

5. Filter assembly as set forth in claim 4, characterized in that the piston valve (32) is provided with a through-bore (35), which interconnects the outlet (4) and the control chamber (34).

6. Filter assembly as set forth in claim 4 or 5, characterized in that the spring chamber (36) has an annular shoulder (38) at the end remote from the diaphragm (33), in that the spring chamber (36) extends through the aperture (24) in the filter cup (20) and the aperture (24) is provided with an annular projection (25), which is sealingly engaged by the annular shoulder (38) of the spring chamber (36).

## Revendications

1. Assemblage de filtrage déstiné à l'installation dans une conduite de passage pour un milieu liquide ou gazeux, constitué d'un élément de tuyau (1) avec une entrée (2) et une sortie (4), avec un talon latéral (6) relié à l'entrée (2) et auquel une tasse de filtre (20) déstinée à recevoir un filtre en forme de bougie (26) généralement annulaire est raccordable, avec un élément de connexion (7) s'étendant coaxialement dans le talon et relié à la sortie, auquel élément de connexion l'espace intérieur du filtre en forme de bougie (26) est raccordable , et avec au moins un raccord de manomètre (11), caractérisé par le fait que l'élément de connexion (7) est pourvu sur le côté en face du filtre en forme de bougie (26), d'une ouverture (9) déstinée à recevoir un reducteur de pression (30), et que la tasse de filtre (20) est pourvue, sur le côté opposé à l'élément de connexion (7), d'un percement (24) pour le passage du reducteur de pression (30).

2. Assemblage de filtrage selon la revendication 1, caractérisé par le fait que l'élément de connexion est formé dans un talon coudé à double paroi dont le tuyau intérieur relie l'espace intérieur (28) du filtre en forme de bougie (26) à la sortie (4), et dont le tuyau extérieur relie l'entrée (2) à l'espace annulaire (27) formé entre la tasse de filtre (20) et le filtre en forme de bougie (26), et que le talon est relié, à l'extrémité opposée à la tasse de filtre (20), à l'élément de tuyau (1) par un élément de connexion de raccord détachable qui, dans l'état détaché, est ajustable angulairement par rapport à l'élément de tuyau (1).

3. Assemblage de filtrage selon la revendication 1 ou 2, caractérisé par le fait que la tasse de filtre (20) présente un guide (23) pour le filtre en forme de bougie (26) sur le côté opposé à l'élément de connexion (7).

4. Assemblage de filtrage selon l'une des revendications 1 à 3, caractérisé par le fait que la soupape reductrice (30) présente d'une manière en principe connue, un corps de siège de soupape (31), un piston de soupape (32) coopérant avec celui-ci et relié à un diaphragme (33), une chambre de commande (34) exposable à la pression de sortie sur un côté du diaphragme (33), un ressort (35) chargant le diaphragme (33) sur l'autre côté, et une chambre de ressort (36) avec un dispositif d'ajustement (39) déstiné à ajuster la tension de ressort, et que le corps de siège de soupape (31) est introduit de manière étanchante dans l'ouverture (9) de l'élément de connexion (7).

5. Assemblage de filtrage selon la revendication 4, caractérisé par le fait que le piston de soupape (32) est pourvu d'un alésage (35) réliant la sortie (4) et la chambre de commande (34).

6. Assemblage de filtrage selon la revendication 4 ou 5, caractérisé par le fait que la chambre de ressort (36) présente, à l'extrémité opposée au diaphragme (33), un épaulement annulaire (38), que la chambre de ressort (36) passe par le percement (24) dans la tasse de filtre (20), et que le percement (24) est pourvu d'un talon annulaire (25) contre lequel l'épaulement annulaire (38) de la chambre de ressort (36) est appliqué de manière étanchante.